# EUROPEAN PATENT SPECIFICATION

(11) **EP 4 151 882 B1**
(45) Date of publication and mention of the grant of the patent: **17.07.2024**
(21) Application number: 21745673.0
(22) Date of filing: 20.01.2021
(51) Int. Cl.: G01B 21/04, G02B 27/00, G08B 21/24, G01B 5/00, G01B 9/04, G02B 21/02, G02B 21/24

(54) **ANTI-COLLISION PROTECTION SYSTEM EMPLOYING RETRACTION UPON CONTACT AND GUIDED POSITIONING, AND MEASUREMENT PLATFORM**
KOLLISIONSSCHUTZSYSTEM MIT ZURÜCKZIEHUNG BEIM KONTAKT UND GEFÜHRTER POSITIONIERUNG SOWIE MESSPLATTFORM
SYSTÈME DE PROTECTION CONTRE LES COLLISIONS UTILISANT UNE RÉTRACTION AU CONTACT ET UN POSITIONNEMENT GUIDÉ, ET PLATEFORME DE MESURE

(30) Priority: 11.05.2020 CN 202010393246
(43) Date of publication of application: 22.03.2023
(73) Proprietor: CHOTEST TECHNOLOGY INC., Shenzhen, Guangdong 518000 (CN)
(72) Inventor: WU, Hong Jian, Shenzhen Guangdong 518000 (CN); ZHANG, He Jun, Shenzhen Guangdong 518000 (CN)
(74) Representative: Isern Patentes y Marcas S.L.
(86) International application number: PCT/CN2021/072872
(87) International publication number: WO 2021/227549

(56) References cited:
- CN-A- 103 256 891
- CN-A- 109 154 494
- CN-A- 109 489 564
- CN-A- 111 609 082
- CN-U- 206 223 981
- CN-U- 209 928 128
- CN-U- 209 928 128
- CN-U- 212 480 002
- JP-A- 2009 109 786
- US-A1- 2016 363 431
- US-B2- 10 365 087

## Description

### TECHNICAL FIELD

The present invention relates to a measurement instrument, and in particular, to a contact type telescopic guiding and positioning anti-collision protection system and a measurement platform.

### FIELD BACKGROUND

Anti-collision systems are generally used in fields of precision measurement, optics and the like. Currently, there are mainly the following several solutions for anti-collision protection systems applied to the field of precision optical measurement.
1. Pulse type laser ranging: a laser signal is emitted to a target and is reflected once approaching the target, and a to-be-positioned distance is calculated through round trip time of a received optical signal.
2. Continuous wave phase type laser ranging: a continuously-modulated laser wave irradiates a measured target, and a distance of the measured target can be calculated from a phase change caused by round trip of light velocity measurement. To ensure measurement precision, generally a laser reflector needs to be mounted on the measured target.
3. Ultrasonic ranging: the time consumed when a sound wave is emitted and reflected after being encountered with a target is measured by using a known propagation velocity of the ultrasound wave in air, and an actual distance from an emission point to a sample is calculated according to a time difference of emission and receival.

The defects of the above-mentioned existing solutions are as below.
(1). It is found in practice that samples of different materials have different surface reflectivity due to the diffuse reflection problem of light in laser ranging, resulting in larger ranging errors, inaccurate positioning and thus accidental collision and damage to a protected part.
(2). It is found in practice that a laser ranging device is higher in manufacturing difficulty and higher in cost, and an optical system needs to be kept clean and has a higher requirement for an environment.
(3). Ultrasonic ranging is lower in precision and high in cost, and an optical device with a smaller working distance cannot be protected at all because there is dozens of millimeters of blind region in a minimum detection region.
(4). Current non-contact ranging hardly satisfies surface positioning and measurement of some small-sized, low-reflectivity, high and sharp samples.

Therefore, how to provide an anti-collision system not prone to damage, low in cost, lower in requirement for an environment and wide in application range is the technical problem urgently needing to be solved by a person skilled in the art.

A relevant prior art document is US 2016/363431 A1, that discloses a contact type sensing assembly.

### SUMMARY

To solve the problems in the prior art, the present invention provides a contact type telescopic guiding and positioning anti-collision protection system and a measurement platform.

The present invention provides a contact type telescopic guiding and positioning anti-collision protection system, including a guide shaft sleeve, a concentrated ball slide sleeve, a sliding shaft, a spring, a baffle, a contact type sensing assembly, a movable contact, a fixing ring and an optical lens, where the concentrated ball slide sleeve is mounted on an inner side face of the guide shaft sleeve, the sliding shaft penetrates through the concentrated ball slide sleeve and is connected to the fixing ring, the sliding shaft and the concentrated ball slide sleeve are in rolling friction, the optical lens is mounted on the fixing ring, the baffle is connected to the guide shaft sleeve, the spring is clamped between the baffle and the sliding shaft, the spring has a reset effect, the movable contact is clamped between the sliding shaft and the fixing ring, the contact type sensing assembly is fixed to the guide shaft sleeve, and when the anti-collision protection system moves in a forward direction and is in contact with a surface of a sample, the movable contact and the sliding shaft synchronously move in a reverse direction till the movable contact is in contact with the contact type sensing assembly to trigger a contact signal.

As a further improvement on the present invention, a head portion of the sliding shaft penetrates through the concentrated ball slide sleeve and is in screw thread connection with a tail portion of the fixing ring, a conical surface positioning structure is disposed between a tail portion of the sliding shaft and a tail portion of the guide shaft sleeve, the baffle is fixed to the tail portion of the guide shaft sleeve, and the spring is clamped between the baffle and the tail portion of the sliding shaft.

As a further improvement on the present invention, the optical lens is in screw thread connection with a head portion of the fixing ring, and the movable contact is clamped between the head portion of the sliding shaft and the tail portion of the fixing ring.

As a further improvement on the present invention, a conical surface positioning convex block is disposed at the tail portion of the sliding shaft, and a conical surface positioning chamfer matched with the conical surface positioning convex block is disposed at the tail portion of the guide shaft sleeve.

As a further improvement on the present invention, the contact type sensing assembly includes a trigger circuit board and a contact probe disposed on the trigger circuit board, and a contact convex block matched with the contact probe is disposed on the movable contact.

As a further improvement on the present invention, an anti-rotation convex block is disposed on the movable contact, the guide shaft sleeve is provided with an anti-rotation groove, and the anti-rotation convex block is disposed in the anti-rotation groove.

The present invention further provides a measurement platform, including the contact type telescopic guiding and positioning anti-collision protection system according to any one of the above.

As a further improvement on the present invention, the measurement platform further includes a driving system, where the driving system includes a driving part, an execution part and a control part, the control part is connected to the driving part, the driving part is connected to the execution part, the execution part is connected to the guide shaft sleeve or the baffle, and the control part is connected to the contact type sensing assembly.

The present invention has the beneficial effects: through the above solutions, contact type anti-collision protection is adopted, no reflecting and receiving device is needed, there is no requirement for a distance from a protected device to a sample, universality is wide, trigger is flexible, power-off protection is executed once contact is performed, there is no requirement for an environment, a cost is low, high safety and reliability are realized due to a mechanical structure, and damage is not easy.

### BRIEF DESCRIPTION OF THE DRAWINGS

FIG. 1 is a schematic exploded view of a contact type telescopic guiding and positioning anti-collision protection system of the present invention;
FIG. 2 is a schematic sectional view of a contact type telescopic guiding and positioning anti-collision protection system of the present invention; and
FIG. 3 is a schematic assembly diagram of a contact type telescopic guiding and positioning anti-collision protection system of the present invention.

### DETAILED DESCRIPTION

The following further describes the present invention with reference to the accompanying drawings and the specific embodiments.

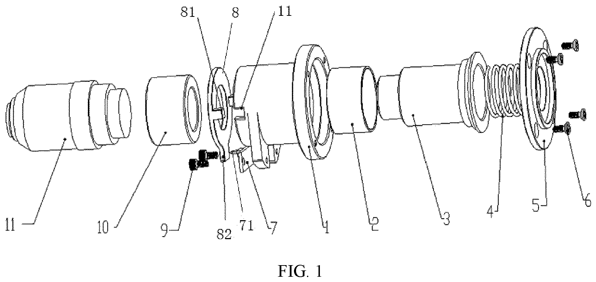

As shown in FIG. 1 to FIG. 3, to solve the problem that an objective lens or an important probe device in a probe of an optical device is damaged by collision at present, the present invention provides a contact type telescopic guiding and positioning anti-collision protection system, including a guide shaft sleeve 1, a concentrated ball slide sleeve 2, a sliding shaft 3, a spring 4, a baffle 5, a contact type sensing assembly, a movable contact 8, a fixing ring 10 and an optical lens 11, where the concentrated ball slide sleeve 2 is mounted on an inner side face of the guide shaft sleeve 1, the sliding shaft 3 penetrates through the concentrated ball slide sleeve 2 and is connected to the fixing ring 10, the sliding shaft 3 and the concentrated ball slide sleeve 2 are in rolling friction, the optical lens 11 is mounted on the fixing ring 10, the baffle 5 is connected to the guide shaft sleeve 1, the spring 4 is clamped between the baffle 5 and the sliding shaft 3, the spring 4 has a reset effect, the movable contact 8 is clamped between the sliding shaft 3 and the fixing ring 10, the contact type sensing assembly is fixed to the guide shaft sleeve 1, and the movable contact 8 and the sliding shaft 3 synchronously move in a reverse direction till the movable contact 8 is in contact with the contact type sensing assembly to trigger a contact signal when the anti-collision protection system moves in a forward direction and is in contact with a surface of a sample.

As shown in FIG. 1 to FIG. 3, a head portion of the sliding shaft 3 penetrates through the concentrated ball slide sleeve 2 and is in screw thread connection with a tail portion of the fixing ring 10, a conical surface positioning structure is disposed between a tail portion of the sliding shaft 3 and a tail portion of the guide shaft sleeve 1, the baffle 5 is fixed to the tail portion of the guide shaft sleeve 1, and the spring 4 is clamped between the baffle 5 and the tail portion of the sliding shaft 3.

As shown in FIG. 1 to FIG. 3, the optical lens 11 is in screw thread connection with a head portion of the fixing ring 10, and the movable contact 8 is clamped between the head portion of the sliding shaft 3 and the tail portion of the fixing ring 10.

As shown in FIG. 1 to FIG. 3, a conical surface positioning convex block 31 is disposed at the tail portion of the sliding shaft 3, and a conical surface positioning chamfer 12 matched with the conical surface positioning convex block 31 is disposed at the tail portion of the guide shaft sleeve 1.

As shown in FIG. 1 to FIG. 3, the contact type sensing assembly includes a trigger circuit board 7 and a contact probe 71 disposed on the trigger circuit board 7, and a contact convex block 82 matched with the contact probe 71 is disposed on the movable contact 8.

As shown in FIG. 1 to FIG. 3, an anti-rotation convex block 81 is disposed on the movable contact 8, the guide shaft sleeve 1 is provided with an anti-rotation groove 11, and the anti-rotation convex block 81 is disposed in the anti-rotation groove 11.

An assembling process of the contact type telescopic guiding and positioning anti-collision protection system provided in the present invention includes the following steps.

Step 1: Mount the concentrated ball slide sleeve 2 onto the guide shaft sleeve 1.

Step 2: Make the sliding shaft 3 penetrate through the concentrated ball slide sleeve 2 and penetrate out of the guide shaft sleeve 1.

Step 3: Make the movable contact 8 sleeve the sliding shaft 3, and screw upwards through threads of the fixing ring 10 and the sliding shaft 3 to tightly clamp the movable contact 8 and to make the anti-rotation convex block 81 of the movable contact 8 matched with the anti-rotation groove 11 of the guide shaft sleeve 1 (as shown in FIG. 1).

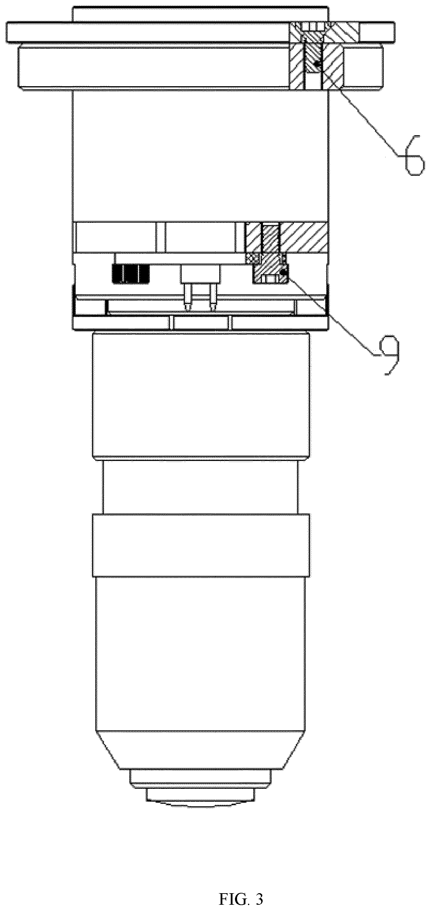

Step 4: Fix the trigger circuit board 7 to the guide shaft sleeve 1 through trigger circuit board fixing screws 9 (as shown in FIG. 3) to ensure that a distance between the contact probe 71 of the trigger circuit board 7 and the movable contact 8 is approximately 0.5 mm.

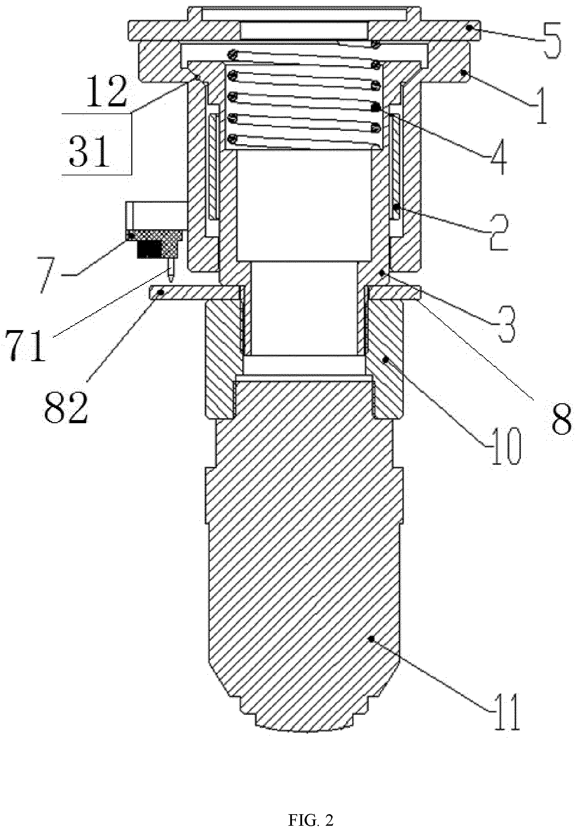

Step 5: Mount the spring 4 onto the sliding shaft 3 (as shown in FIG. 2), cover with the baffle 5, and tightly lock through fixing screws 6 (as shown in FIG. 3).

Step 6: Screw the optical lens 11 into the fixing ring 10 through threads (as shown in FIG. 2).

The present invention further provides a measurement platform, including the contact type telescopic guiding and positioning anti-collision protection system of any one of the above.

The measurement platform further includes a driving system, where the driving system includes a driving part, an execution part and a control part, the control part is connected to the driving part, the driving part is connected to the execution part, the execution part is connected to the guide shaft sleeve or the baffle, and the control part is connected to the contact type sensing assembly.

A working principle of the contact type telescopic guiding and positioning anti-collision protection system provided in the present invention is as below.

Since the sliding shaft 3, the movable contact 8, the fixing ring 10 and the optical lens 11 are connected into a whole, when the optical lens 11 moves downwards and touches a surface of a sample, the optical lens 11 bears slight force to move upwards due to counteraction of force and drives the movable contact 8 to move upwards and touch the trigger circuit board 7. The trigger circuit board 7 sends a signal to the driving system to make the optical lens 11 stop moving downward, and thus a protection effect is achieved. The optical lens 11 is enabled to get away from the sample through external driving force. The spring 4 stretches reversely, and the concentrated ball slide sleeve 2 guides and pushes the sliding shaft 3, to make the movable contact 8 disengaged from the trigger circuit board 7. Since the guide shaft sleeve 1 and the sliding shaft 3 are in conical surface fit, the optical lens 11 is enabled to return to an original position, and thus a positioning effect is achieved.

The contact type telescopic guiding and positioning anti-collision protection system provided in the present invention features that the shape and size of the sample are neglected, the magnitude of collision force is regulated through the magnitude of spring force, an important device can be telescopically buffered after contact, signal power-off protection is triggered once collision occurs, and meanwhile the system is easily designed to be integral with a protected piece; the structure is simple, an device is integrated and miniaturized, reliability is strong, and a cost is greatly reduced.

The contact type telescopic guiding and positioning anti-collision protection system and the measurement platform provided in the present invention have the following improvements.
1. A concentrated ball guide telescopic movement mode: the concentrated ball slide sleeve 2 is mounted between the guide shaft sleeve 1 and the sliding shaft 3 for guiding, conventional dry friction is replaced with rolling friction, the optical lens 11 drives the sliding shaft 3 to move when moving up and down, the sliding shaft 3 resets through compression force (or stretch force) of the spring 4 (as shown in FIG. 2), and the problem that the anti-collision failure is caused when dry friction leads to abrasion and friction force is increased is solved.
2. A conical surface positioning mode (as shown in FIG. 2): the guide shaft sleeve 1 and the sliding shaft 3 are guided and positioned through their conical surfaces when moving relatively and returning to original positions, and the problem of positioning after collision of a device is solved.
3. An anti-rotation mechanical structural mode (as shown in FIG. 1): when threads of the fixing ring 10 and the sliding shaft 3 are screwed upwards, the movable contact 8 is tightly clamped, and a boss of the movable contact 8 is matched with a pit of the guide shaft sleeve 1, so that a structural member (as shown in FIG. 2) formed by connecting the optical lens 11, the fixing ring 10 and the sliding shaft 3 into a whole cannot rotate, thereby solving the problem of rotation of a positioning shaft.
4. A mechanical and electronic combined triggered power-off mode (as shown in FIG. 2): the optical lens 11 stops moving downwards or the whole system (device) is powered off when the movable contact 8 moves upwards and touches the trigger circuit board 7 and the trigger circuit board 7 sends a signal to the driving system, to achieve the effect of emergency stop protection.

The contact type telescopic guiding and positioning anti-collision protection system and the measurement platform provided in the present invention have the following advantages.
(1). Contact type anti-collision protection is adopted, no reflecting and receiving device is needed, there is no requirement for a distance from a protected device to a sample, and universality is wide.
(2). Trigger is flexible, power-off protection is executed once contact is performed, there is no requirement for an environment, a cost is low, and high safety and reliability are realized due to a mechanical structure.
(3). An anti-collision protection effect can be quite flexibly achieved regardless of the size, height and reflectivity of a sample.
(4). A protection structure can be well designed according to this contact type anti-collision design principle, the device is made to be attractive, and economic value is improved.

The contact type telescopic guiding and positioning anti-collision protection system provided in the present invention can be used for some industrial detecting instruments and high precision platforms such as image microscopic measurement probes, high power objective lenses, interference objective lenses, nanometer probes and nanometer displacement tables.

## Claims

1. A contact type telescopic guiding and positioning anti-collision protection system, comprising a guide shaft sleeve, a concentrated ball slide sleeve, a sliding shaft, a spring, a baffle, a contact type sensing assembly, a movable contact, a fixing ring and an optical lens, wherein the concentrated ball slide sleeve is mounted on an inner side face of the guide shaft sleeve, the sliding shaft penetrates through the concentrated ball slide sleeve and is connected to the fixing ring, the sliding shaft and the concentrated ball slide sleeve are in rolling friction, the optical lens is mounted on the fixing ring, the baffle is connected to the guide shaft sleeve, the spring is clamped between the baffle and the sliding shaft, the spring has a reset effect, the movable contact is clamped between the sliding shaft and the fixing ring,
**characterised in that**
the contact type sensing assembly is fixed to the guide shaft sleeve, and when the anti-collision protection system moves in a forward direction and is in contact with a surface of a sample, the movable contact and the sliding shaft synchronously move in a reverse direction till the movable contact is in contact with the contact type sensing assembly to trigger a contact signal.

2. The contact type telescopic guiding and positioning anti-collision protection system according to claim 1, wherein a head portion of the sliding shaft penetrates through the concentrated ball slide sleeve and is in screw thread connection with a tail portion of the fixing ring, a conical surface positioning structure is disposed between a tail portion of the sliding shaft and a tail portion of the guide shaft sleeve, the baffle is fixed to the tail portion of the guide shaft sleeve, and the spring is clamped between the baffle and the tail portion of the sliding shaft.

3. The contact type telescopic guiding and positioning anti-collision protection system according to claim 2, wherein the optical lens is in screw thread connection with a head portion of the fixing ring, and the movable contact is clamped between the head portion of the sliding shaft and the tail portion of the fixing ring.

4. The contact type telescopic guiding and positioning anti-collision protection system according to claim 2, wherein a conical surface positioning convex block is disposed at the tail portion of the sliding shaft, and a conical surface positioning chamfer matched with the conical surface positioning convex block is disposed at the tail portion of the guide shaft sleeve.

5. The contact type telescopic guiding and positioning anti-collision protection system according to claim 1, wherein the contact type sensing assembly comprises a trigger circuit board and a contact probe disposed on the trigger circuit board, and a contact convex block matched with the contact probe is disposed on the movable contact.

6. The contact type telescopic guiding and positioning anti-collision protection system according to claim 5, wherein an anti-rotation convex block is disposed on the movable contact, the guide shaft sleeve is provided with an anti-rotation groove, and the anti-rotation convex block is disposed in the anti-rotation groove.

7. A measurement platform, comprising the contact type telescopic guiding and positioning anti-collision protection system according to any one of claims 1 to 6.

8. The measurement platform according to claim 7, further comprising a driving system, wherein the driving system comprises a driving part, an execution part and a control part, the control part is connected to the driving part, the driving part is connected to the execution part, the execution part is connected to the guide shaft sleeve or the baffle, and the control part is connected to the contact type sensing assembly.

## Patentansprüche

1. Teleskopisches Führungs- und Positionier-Kollisionsschutzsystem vom Kontakttyp, umfassend eine Führungswellenhülse, eine konzentrierte Kugelgleithülse, eine Gleitwelle, eine Feder, eine Blende, eine Sensorbaugruppe vom Kontakttyp, einen beweglichen Kontakt, einen Haltering und eine optische Linse, wobei die konzentrierte Kugelgleithülse an einer inneren Seitenfläche der Führungswellenhülse montiert ist, die Gleitwelle die konzentrierte Kugelgleithülse durchdringt und mit dem Haltering verbunden ist, die Gleitwelle und die konzentrierte Kugelgleithülse in Rollreibung stehen, die optische Linse auf dem Haltering montiert ist, die Blende mit der Führungswellenhülse verbunden ist, die Feder zwischen der Blende und der Gleitwelle eingeklemmt ist, die Feder eine Rückstellwirkung hat, der bewegliche Kontakt zwischen der Gleitwelle und dem Haltering eingeklemmt ist,
**dadurch gekennzeichnet, dass** die Sensorbaugruppe vom Kontakttyp an der Führungswellenhülse fixiert ist, und wenn sich das Kollisionsschutzsystem in Vorwärtsrichtung bewegt und mit einer Oberfläche einer Probe in Kontakt ist, bewegen sich der bewegliche Kontakt und die Gleitwelle synchron in Rückwärtsrichtung, bis der bewegliche Kontakt mit der Sensorbaugruppe vom Kontakttyp in Kontakt ist, um ein Kontaktsignal auszulösen.

2. Teleskopisches Führungs- und Positionier-Kollisionsschutzsystem vom Kontakttyp nach Anspruch 1, wobei ein Kopfabschnitt der Gleitwelle die konzentrierte Kugelgleithülse durchdringt und mit einem Endabschnitt des Halterings in Schraubverbindung steht, eine Positionierstruktur mit konischer Oberfläche zwischen einem Endabschnitt der Gleitwelle und einem Endabschnitt der Führungswellenhülse angeordnet ist, die Blende an dem Endabschnitt der Führungswellenhülse fixiert ist und die Feder zwischen der Blende und dem Endabschnitt der Gleitwelle eingeklemmt ist.

3. Teleskopisches Führungs- und Positionier-Kollisionsschutzsystem vom Kontakttyp nach Anspruch 2, wobei die optische Linse mit einem Kopfabschnitt des Halterings in Schraubverbindung steht und der bewegliche Kontakt zwischen dem Kopfabschnitt der Gleitwelle und dem Endabschnitt des Halterings eingeklemmt ist.

4. Teleskopisches Führungs- und Positionier-Kollisionsschutzsystem vom Kontakttyp nach Anspruch 2, wobei am Endabschnitt der Gleitwelle ein konvexer Positionierungsblock mit konischer Oberfläche angeordnet ist und am Endabschnitt der Führungswellenhülse eine auf den konvexen Positionierungsblock mit konischer Oberfläche abgestimmte Positionierungsfase mit konischer Oberfläche angeordnet ist.

5. Teleskopisches Führungs- und Positionier-Kollisionsschutzsystem vom Kontakttyp nach Anspruch 1, wobei die Sensorbaugruppe vom Kontakttyp eine Auslöseleiterplatte und eine auf der Auslöseleiterplatte angeordnete Kontaktsonde umfasst und ein auf die Kontaktsonde abgestimmter konvexer Kontaktblock auf dem beweglichen Kontakt angeordnet ist.

6. Teleskopisches Führungs- und Positionier-Kollisionsschutzsystem vom Kontakttyp nach Anspruch 5, wobei ein konvexer Antirotationsblock an dem beweglichen Kontakt angeordnet ist, die Führungswellenhülse mit einer Antirotationsnut versehen ist und der konvexe Antirotationsblock in der Antirotationsnut angeordnet ist.

7. Messplattform, umfassend das teleskopische Führungs- und Positionier-Kollisionsschutzsystem vom Kontakttyp nach einem der Ansprüche 1 bis 6.

8. Messplattform nach Anspruch 7, ferner umfassend ein Antriebssystem, wobei das Antriebssystem einen Antriebsteil, einen Ausführungsteil und einen Steuerungsteil umfasst, der Steuerungsteil mit dem Antriebsteil verbunden ist, der Antriebsteil mit dem Ausführungsteil verbunden ist, der Ausführungsteil mit der Führungswellenhülse oder der Blende verbunden ist und der Steuerungsteil mit der Sensorbaugruppe vom Kontakttyp verbunden ist.

## Revendications

1. Système de protection anti-collision à guidage et positionnement télescopique de type contact, comprenant un manchon d'arbre de guidage, un manchon de coulissement à bille concentré, un arbre coulissant, un ressort, un déflecteur, un ensemble de détection de type contact, un contact mobile, une bague de fixation et une lentille optique, dans lequel le manchon de coulissement à bille concentré est monté sur une face latérale interne du manchon d'arbre de guidage, l'arbre coulissant pénètre à travers le manchon de coulissement à bille concentré et est relié à la bague de fixation, l'arbre coulissant et le manchon de coulissement à billes concentré sont en friction de roulage, la lentille optique est montée sur la bague de fixation, le déflecteur est relié au manchon d'arbre de guidage, le ressort est serré entre le déflecteur et l'arbre coulissant, le ressort a un effet de réinitialisation, le contact mobile est serré entre l'arbre coulissant et la bague de fixation,
**caractérisé en ce que** l'ensemble de détection de type contact est fixé au manchon d'arbre de guidage, et lorsque le système de protection anti-collision se meut vers l'avant et est en contact avec une surface d'un échantillon, le contact mobile et l'arbre coulissant se meuvent de manière synchrone dans une direction inverse jusqu'à ce que le contact mobile soit en contact avec l'ensemble de détection de type contact pour déclencher un signal de contact.

2. Système de protection anti-collision à guidage et positionnement télescopique de type contact selon la revendication 1, dans lequel une portion tête de l'arbre coulissant pénètre à travers le manchon de coulissement à bille concentré et est en liaison filetée avec une portion queue de la bague de fixation, une structure de positionnement de surface conique est disposée entre une portion queue de l'arbre coulissant et une portion queue du manchon d'arbre de guidage, le déflecteur est fixé à la portion queue du manchon d'arbre de guidage, et le ressort est serré entre le déflecteur et la portion queue de l'arbre coulissant.

3. Système de protection anti-collision à guidage et positionnement télescopique de type contact selon la revendication 2, dans lequel la lentille optique est en liaison filetée avec une portion tête de la bague de fixation, et le contact mobile est serré entre la portion tête de l'arbre coulissant et la portion queue de la bague de fixation.

4. Système de protection anti-collision à guidage et positionnement télescopique de type contact selon la revendication 2, dans lequel un bloc convexe de positionnement de surface conique est disposé au niveau de la portion queue de l'arbre coulissant, et un chanfrein de positionnement de surface conique adapté au bloc convexe de positionnement de surface conique est disposé au niveau de la portion queue du manchon d'arbre de guidage.

5. Système de protection anti-collision à guidage et positionnement télescopique de type contact selon la revendication 1, dans lequel l'ensemble de détection de type contact comprend une carte de circuit de déclenchement et une sonde de contact disposée sur la carte de circuit de déclenchement, et un bloc convexe de contact adapté à la sonde de contact étant disposé sur le contact mobile.

6. Système de protection anti-collision à guidage et positionnement télescopique de type contact selon la revendication 5, dans lequel un bloc convexe anti-rotation est disposé sur le contact mobile, le manchon d'arbre de guidage est pourvu d'une rainure anti-rotation, et le bloc convexe anti-rotation est disposé dans la rainure anti-rotation.

7. Plateforme de mesure, comprenant le système de protection anti-collision à guidage et positionnement télescopique de type contact selon l'une quelconque des revendications 1 à 6.

8. Plateforme de mesure selon la revendication 7, comprenant en outre un système d'entraînement, dans lequel le système d'entraînement comprend une partie entraînement, une partie exécution et une partie commande, la partie commande est reliée à la partie entraînement, la partie entraînement est reliée à la partie exécution, la partie exécution est reliée au manchon d'arbre de guidage ou au déflecteur, et la partie commande est reliée à l'ensemble de détection de type contact.
